# FASCICULE DE BREVET EUROPEEN

(11) **EP 1 321 696 B1**
(45) Date de publication et mention de la délivrance du brevet: **24.08.2005**
(21) Numéro de dépôt: 02293196.8
(22) Date de dépôt: 20.12.2002
(51) Int. Cl.: F16H 55/14, F16F 15/26

(54) **Système d'équilibrage pour moteur à combustion**
Ausgleichssystem für Brennkraftmotor
Balancing system for internal combustion engine

(30) Priorité: 20.12.2001 FR 0116529
(43) Date de publication de la demande: 25.06.2003
(73) Titulaire: Renault s.a.s., 92100 Boulogne Billancourt (FR)
(72) Inventeur: Raffier, Ludovic, 75017 Paris (FR)

(56) Documents cités:
- WO-A-00/34610
- WO-A-01/33105
- US-A- 4 674 351
- PATENT ABSTRACTS OF JAPAN vol. 010, no. 040 (M-454), 18 février 1986 (1986-02-18) & JP 60 192145 A (KAWASAKI JUKOGYO KK), 30 septembre 1985 (1985-09-30)
- PATENT ABSTRACTS OF JAPAN vol. 1999, no. 05, 31 mai 1999 (1999-05-31) & JP 11 051120 A (OTIX:KK;TOYOTA MOTOR CORP), 23 février 1999 (1999-02-23)

## Description

L'invention concerne le filtrage des vibrations du moteur, à l'intérieur d'un système d'équilibrage.

Plus précisément, elle se rapporte à un système d'équilibrage comprenant un arbre menant qui supporte un premier pignon entraîné par la couronne du vilebrequin du moteur et un second pignon entraînant un arbre mené par l'intermédiaire d'un troisième pignon fixé sur ce dernier.

Les moteurs alternatifs à combustion interne comportent des parties mobiles, telles que le vilebrequin, la bielle et le piston, dont la rotation provoque des efforts qui se traduisent par des vibrations du moteur préjudiciables au confort du passager.

Pour résoudre ce problème il est connu d'ajouter au moteur un système d'équilibrage composé d'arbres entraînés de façon synchrone avec le vilebrequin, et dont la masse est répartie de façon à provoquer des efforts opposés à ceux produits par l'attelage mobile, de manière à réduire les vibrations du moteur.

Habituellement, la disposition retenue pour un moteur à quatre cylindres consiste en deux arbres d'équilibrage contrarotatif tournant à vitesse double de celle du vilebrequin. L'un des arbres est entraîné par le vilebrequin par l'intermédiaire d'un engrenage et celui-ci entraîne à son tour le deuxième arbre.

Les arbres d'équilibrage sont disposés dans une cassette, rapportée sous le carter cylindre, et fixé au moyen de cales de réglage, qui limitent les jeux de denture entre la couronne du vilebrequin et les pignons entraînant les arbres.

Ces arbres peuvent aussi être entraînés par une chaîne ou une courroie synchrone.

Dans le cas d'entraînement par pignons, l'inconvénient majeur est de générer du bruit de claquement entre les dentures. Un second inconvénient est la transmission par la couronne, montée sur le vilebrequin, des vibrations angulaires de torsion dynamique vers les pignons d'entraînement des arbres d'équilibrage.

Actuellement pour réduire les bruits d'engrènement, la couronne et les pignons d'acier comportent des engrenages hélicoïdaux.

Mais l'utilisation des pignons acier à denture hélicoïdale ne permet pas de réduire significativement les bruits de claquement de denture. De plus il faut alors utiliser des cales de réglage des jeux de denture qui complexifient le procédé de montage des cassettes d'arbres d'équilibrage. L'emploi des cales ne permet pas de réduire les couples de torsion dynamique issus du vilebrequin et transmis aux arbres d'équilibrage par l'intermédiaire de la couronne.

La publication JP 11051120 décrit un système d'équilibrage selon le préambule de la revendication 1, comprenant un filtre dynamique avec emploi de pignon composite sans utilisation de cales. Les pignons composites ont l'avantage de réduire les bruits d'engrènement, mais ne filtrent pas les couples dynamiques. Cette fonction est réalisée par l'introduction de butées caoutchouc entre un pignon fou et un moyeu fixe fretté sur l'arbre d'équilibrage menant. Afin de limiter le phénomène de résonance dû à l'introduction d'une raideur très faible dans le système, un frottement sec est introduit par l'ajout de bagues à lèvres entre le pignon fou et un moyeu fixe.

Cette solution permet de s'affranchir des cales mais ce système reste coûteux. De plus, le frottement sec réalisé par les bagues à lèvres semble difficile à maîtriser et l'usure des bagues dans le temps ne sera pas négligeable.

Pour remédier à ces inconvénients, l'invention se propose, tout en utilisant des pignons dont le matériau possède d'excellentes propriétés acoustiques, de supprimer les bruits d'engrènement des dentures et de réduire les vibrations provenant du vilebrequin au moyen d'un élément simple et peu coûteux et possédant une bonne tenue mécanique.

Pour cela, l'invention propose un système d'équilibrage pour moteur à combustion, comprenant un arbre menant entraîné par un pignon engrené par la couronne du vilebrequin, un arbre mené entraîné par un second pignon de l'arbre menant, et un filtre dynamique, celui-ci étant créé par l'insertion d'un matériau souple situé entre le pignon et une bague en acier fixée sur l'arbre d'équilibrage, une autre bague en acier permet la liaison entre le pignon et le matériau souple.

Selon un autre aspect de l'invention, le système d'équilibrage pour moteur à combustion, comporte des pignons entraînant les arbres, lesdits pignons étant réalisés dans un matériau composite.

Selon un autre avantage de l'invention les pignons sont surmoulés sur les bagues en acier.

Selon un autre avantage, le matériau souple est en caoutchouc en forme de marguerite ou en forme elliptique.

D'autres caractéristiques et avantages de la présente invention apparaîtront clairement à la lecture de la description suivante d'un mode de réalisation en liaison avec les dessins annexés.

La figure 1 représente une vue d'ensemble d'un système d'équilibrage connu..

La figure 2 représente une coupe axiale du système d'équilibrage faisant l'objet de l'invention..

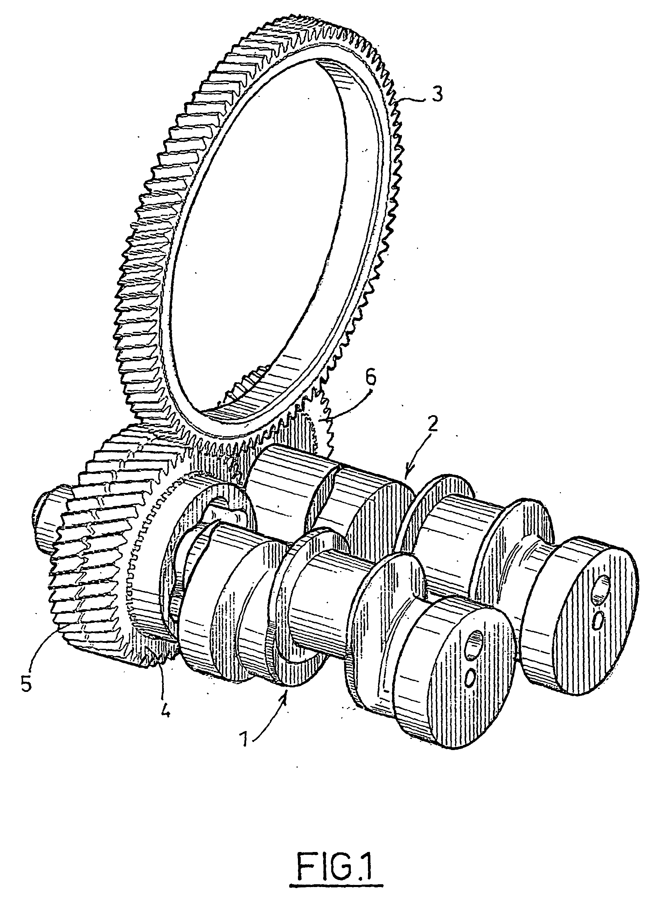

Sur la figure 1 est dessiné le système d'engrènement des arbres d'équilibrage. Ce système, fixé de deux arbres d'équilibrage (1, 2), comprend une couronne (3) montée sur le bras du vilebrequin, non représenté, et plusieurs pignons (4, 5, 6) fixés sur les arbres. Un des pignons (4), entourant le premier arbre, est entraîné par la couronne. Un second pignon (5) est solidaire du premier arbre (1). Il est posé à chaud et se fixe sur l'arbre en refroidissant. Il entraîne le deuxième arbre (2) d'équilibrage au moyen d'un engrenage, représenté sur ce dessin par un pignon (6). Les pignons peuvent être en matériau composite, par exemple du plastique, ou du polyphtalamide aromatique haute température chargé en fibre de verre ou fibre de carbone, pour limiter les bruits d'engrènement.

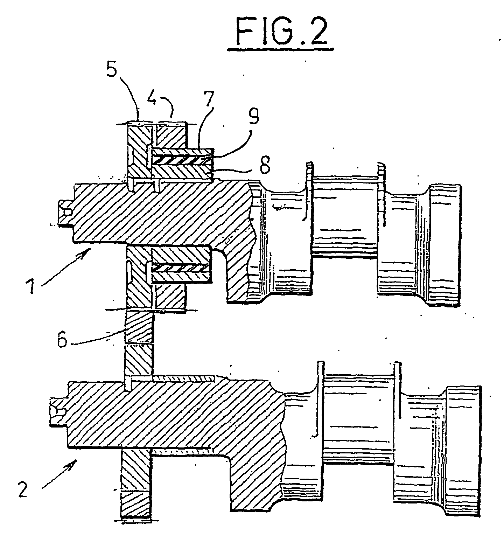

Sur la figure 2, on peut voir l'ensemble du système d'équilibrage monté sur les arbres d'équilibrage.

Ce système est constitué d'une bague souple (9) fixé sur l'arbre (1) par l'intermédiaire de deux bagues (7, 8) en acier, les arbres (1, 2) étant en mouvement grâce à l'ensemble du système d'engrenage, tel que décrit dans la figure 1. Une bague (8) permet la liaison entre l'arbre et la bague souple, et une autre bague (7) permet la liaison entre la bague souple (9) et le pignon (4) entraîné par la couronne. Le pignon (4), en matériau composite peut être surmoulé sur la bague en acier (7).

Le premier arbre (1) porte la bague souple (9), qui est constitué d'un matériau souple, tel que le caoutchouc, et qui absorbe les vibrations transmises par le vilebrequin. Dans un mode de réalisation particulier, le caoutchouc pourra avoir une forme en marguerite ou elliptique afin d'introduire une raideur non linéaire dans le système, de manière à éviter les phénomènes de résonance, pouvant entraîner une rupture du système, en découplant les vibrations qui proviennent du vilebrequin.

La bague (7) est, de préférence, fabriquée dans un acier de haute résistance mécanique, afin d'obtenir une liaison, entre le pignon et la butée en caoutchouc, résistante à l'usure.

Ce système, incluant des bagues (7, 8, 9) en acier, permet de filtrer les couples dynamiques provenant du vilebrequin et ainsi de réduire les vibrations. Un déplacement angulaire relatif entre le pignon (4) et l'arbre (1) d'équilibrage est possible grâce à l'ajout de cette bague (9) en matériau mou, évitant ainsi les phénomènes de résonance.

De plus, ces bagues (7, 8) simplifient l'étape de montage des cassettes d'équilibrage en supprimant les cales, qui sont placées entre la cassette et le carter cylindre du moteur pour limiter les jeux de denture.

Ces deux bagues sont composées d'un acier ayant une bonne tenue mécanique. Il en résulte une meilleure résistance de celles-ci, et une usure moins rapide dans le temps.

## Revendications

1. Système d'équilibrage, pour moteur à combustion, comprenant un arbre (1) menant qui supporte un premier pignon (4) entraîné par la couronne (3) du vilebrequin du moteur et un second pignon (5) entraînant un arbre (2) mené par l'intermédiaire d'un troisième pignon (6) fixé sur ce dernier, **caractérisé en ce que** le premier pignon (4) renferme une bague (9) en matériau souple insérée entre deux bagues (8, 7) en acier fixées respectivement sur l'arbre menant (1) et à l'intérieur du pignon (4).

2. Système d'équilibrage pour moteur à combustion selon la revendication 1, **caractérisé en ce que** le premier pignon (4) est réalisé dans un matériau composite.

3. Système d'équilibrage pour moteur à combustion, selon la revendication 1, **caractérisé en ce que** le premier pignon (4) est surmoulé sur une bague en acier (7).

4. Système d'équilibrage pour moteur à combustion selon la revendication 1, **caractérisé en ce que** le matériau souple est en caoutchouc en forme de marguerite ou elliptique.

## Patentansprüche

1. Ausgleichssystem für einen Verbrennungsmotor, aufweisend eine Antriebswelle (1), welche ein erstes Ritzel (4) trägt, das durch einen Zahnring (3) der Kurbelwelle des Motors angetrieben wird, und ein zweites Ritzel (5), das eine Abtriebswelle (2) durch ein drittes Ritzel (6) antreibt, das fest auf dieser letzteren befestigt ist, **dadurch gekennzeichnet, dass** das erste Ritzel (4) einen Ring (9) aus nachgiebigem Material enthält, der zwischen zwei Ringen (8, 7) aus Stahl eingefügt ist, die jeweils an der Antriebswelle (1) und am Inneren des Ritzels (4) befestigt sind.

2. Ausgleichssystem für einen Verbrennungsmotor nach Anspruch 1, **dadurch gekennzeichnet, dass** das erste Ritzel (4) aus einem Verbundmaterial realisiert ist.

3. Ausgleichssystem für einen Verbrennungsmotor nach Anspruch 1, **dadurch gekennzeichnet, dass** das erste Ritzel (4) auf einen Ring aus Stahl (7) übergossen ist.

4. Ausgleichssystem für einen Verbrennungsmotor nach Anspruch 1, **dadurch gekennzeichnet, dass** das nachgiebige Material aus Kautschuk in Margaritenform oder elliptischer Form ist.

## Claims

1. A balancing system for a combustion engine comprising a driving shaft (1) which supports a first pinion (4) driven by the ring (3) of the crankshaft of the engine and a second pinion (5) driving a shaft (2) which is driven by way of a third pinion (6) fixed on the latter, **characterised in that** the first pinion (4) contains a ring (9) of flexible material inserted between two rings (8, 7) of steel which are respectively fixed on the driving shaft (1) and to the interior of the pinion (4).

2. A balancing system for a combustion engine according to claim 1 **characterised in that** the first pinion (4) is made of a composite material.

3. A balancing system for a combustion engine according to claim 1 **characterised in that** the first pinion (4) is moulded on to a steel ring (7).

4. A balancing system for a combustion engine according to claim 1 **characterised in that** the flexible material is of rubber of an elliptical or daisy shape.
